# EUROPEAN PATENT SPECIFICATION

(11) **EP 1 489 913 B1**
(45) Date of publication and mention of the grant of the patent: **14.11.2007**
(21) Application number: 03744770.3
(22) Date of filing: 26.03.2003
(51) Int. Cl.: A22B 1/00, A22B 5/02

(54) **ARRANGEMENT AND METHOD FOR DIVISION OF ANIMALS INTO GROUPS AND TRANSFER OF GROUPS OF ANIMALS TO A STUNNING APPARATUS**
ANORDNUNG UND VERFAHREN ZUR AUFTEILUNG VON TIEREN IN GRUPPEN UND TRANSFERIEREN VON TIERGRUPPEN ZU EINER BETÄUBUNGSVORRICHTUNG
DISPOSITIF ET PROCEDE DE SEPARATION D'ANIMAUX EN GROUPES ET DE TRANSFERT DE GROUPES D'ANIMAUX VERS UN DISPOSITIF D'ETOURDISSEMENT

(30) Priority: 27.03.2002 DK 200200465
(43) Date of publication of application: 29.12.2004
(73) Proprietor: Slagteriernes Forskningsinstitut, 4000 Roskilde (DK)
(72) Inventor: CHRISTENSEN, Leif, DK-3500 Vaerloese (DK)
(74) Representative: Elsworth, Dominic Stephen
(86) International application number: PCT/DK2003/000203
(87) International publication number: WO 2003/079799

(56) References cited:
- EP-A2- 0 643 917
- DK-C- 110 107
- SE-C2- 503 565

## Description

The present invention relates to an arrangement and a method for division of animals into groups and transfer of groups of animals to a stunning apparatus.

Stunning of especially slaughter pigs in groups by means of CO₂ has gained a footing in the slaughterhouses in recent years because this method provides a lenient handling of the animals. From the pen area a flock of animals is driven into a corridor, in which the flock is divided into groups of a size, which matches the box size of the stunning apparatus. Then the groups are driven one by one into the boxes of the stunning apparatus, as these get ready to receive the animals. The boxes used can for instance hold a group of animals of 3-10 slaughter pigs, e. g. a group of 7-8 or 5 animals, obtained by division of a flock of 15 animals into 2 or 3 groups.

In a well-known division system a transverse sliding gate is placed in front of the last corridor section before the entrance to the stunning apparatus, which gate during the division process is partially opened so that only one animal at a time can pass. The gate is closed when a number of animals corresponding to the group size have passed. Then the entrance to the stunning apparatus is opened, and the isolated group of animals is driven into a vacant stunning box by means of a movable wall, which is moved towards the entrance of the stunning apparatus from the side wall furthest away from the entrance. When the animals have been driven into the box and the movable wall has been returned to its starting position, the sliding gate can be opened again, allowing a new group of animals to pass, whereupon the method is repeated for the new group.

A drawback by this system is that the division of animals into groups can only be started when the movable wall is back in its starting position, which limits the capacity of the stunning apparatus.

EP0643917 describes an apparatus for separating a flock of animals into groups. Animals are driven along a corridor towards a set of division gates by means of a sliding elevating gate, the same gate is then used to drive the divided groups into a box for transfer to a stunning pit via a set of tracks. An empty transfer box is then moved to the end of the corridor to receive a new group of animals.

SE-A-503565 describes a system for the stalling of animals in which pigs are forwarded in groups up to a narrowed section before the stunning chamber which brings the animals into line one behind the other.

Other well-known systems for division of animals in groups and transfer of the groups to a stunning apparatus have similar limitations in the handling of the animals.

The purpose of the present invention is to provide an arrangement for division of animals into groups and transfer of groups of animals to a stunning apparatus, by which arrangement the process of division and transfer of a group of animals into the stunning apparatus are flexible and efficient.

The arrangement according to the invention comprises an oblong corridor section in which animals can be driven from an entrance end to an exit end, that it has a division gate in the corridor section between the entrance end and the exit end, which gate is placed in such a way that the corridor area between the division gate and the exit end has room for a number of animals corresponding to the group size, and a transfer section situated at the exit end of the corridor section which transfer section has room for a number of animals corresponding to the group size, and which section has a connection with the entrance to the stunning apparatus such that animals are guided from the transfer section into the stunning apparatus; the arrangement further comprising a gate device, placed at the corridor section, with a travelling sliding gate or a travelling elevating gate which can be moved in the corridor area, from a position at the division gate to a position at the exit end, characterised in that the animals are guided from the transfer section into the stunning apparatus in a group and that the stunning apparatus has room for a number of animals corresponding to the group size.

In the arrangement according to the invention the division process can be started as soon as the passage to the transfer section has been closed behind a driven-in group of animals or perhaps earlier, especially in arrangements using a travelling sliding or travelling elevating gate in the corridor area between the division gate and the exit end. In this way the division process can be started long before the animals in the transfer section have been transferred to a stunning box and the reception state of the transfer section has been re-established. This gives a higher degree of utilization of the stunning apparatus, and the division system has better time to divide a flock of animals into groups, which can result in a significant improvement of the handling of the animals.

Advantageous embodiments of the arrangement according to the invention are stated in claims 2-13.

The method according to the invention for division of animals into groups and transfer of groups of animals to a stunning apparatus wherein
a) animals are driven in an oblong corridor section from an entrance end towards an exit end and past an open division gate, which is placed between the entrance end and the exit end, the division gate being placed in such a way that the corridor area between the division gate and the exit end has room for a number of animals corresponding to the group size,
b) the division gate is closed when a number of animals corresponding to the group size have passed,
c) a gate device placed at the corridor section, with a travelling sliding gate or a travelling elevating gate which can be moved in the corridor area from a position at the division gate to a position at the exit end drives the group of animals into a transfer section, placed in continuation of the corridor section at the exit end of the section when the transfer section is ready to receive a group of animals, which transfer section has room for a number of animals corresponding to the group size and has connection with the entrance to the stunning apparatus such that animals are guided from the transfer section into the stunning apparatus,
d) the access from the corridor section to the transfer section is closed,
e) the group of animals in the transfer section is driven into the stunning apparatus when the said stunning apparatus is ready to receive the group of animals, and
f) the process steps a) to e) are repeated as long as there are animals in the corridor area between the entrance end and the division gate, the division gate being opened between each cycle,
characterised in that the group of animals in the transfer section (16) is driven into the stunning apparatus (3) in a group, the stunning apparatus having room for a number of animals corresponding to the group size.

Preferred embodiments of the method according to the invention are stated in claims 15 - 19.

The arrangement and method according to the invention are used especially for division and transfer of slaughter pigs and sheep (incl. lambs), e. g. for flocks of animals of 15 individuals, which are driven in from the pen area of the slaughterhouse for division into groups of 7-8 or 5 animals and transferred in groups to a stunning apparatus. The arrangement and method can also be used for division and transfer of cattle, whereby a group of animals can be as few as one individual handled at a time by animals weighing several hundred kg, as it may be appropriate to handle such big animals one by one when they are to be driven into and stunned in a stunning apparatus, but of course several heads of cattle can also be handled at a time. The stunning apparatus can be a CO₂ apparatus, an electric stunning apparatus or a shooting box.

According to the present invention a flock of animals is divided into groups of a prearranged size. As the behaviour of the animals cannot be predicted, the arrangement and method of the invention should preferably be designed to handle groups, which comprise one more animal than the prearranged group size. Of course they shall also be able to handle groups which are short of one or several animals in proportion to the prearranged group size and which contain as few as one animal, e.g. when the flock is incomplete. By a prearranged group size of e.g. 5 the space conditions and process times 5 shall therefore preferably be able to tolerate a group of 6 animals, in order that the arrangement and the well-being of the animals do not become inoperative because an extra animal is allowed into the group by the division or because a flock that is to be divided into three contains more than 15 animals. By dividing a flock of 15 animals into two there must necessarily be a group of 7 animals and a group of 8 animals in each, and also here 0 the arrangement should preferably be tolerant to groups of at least 9 animals.

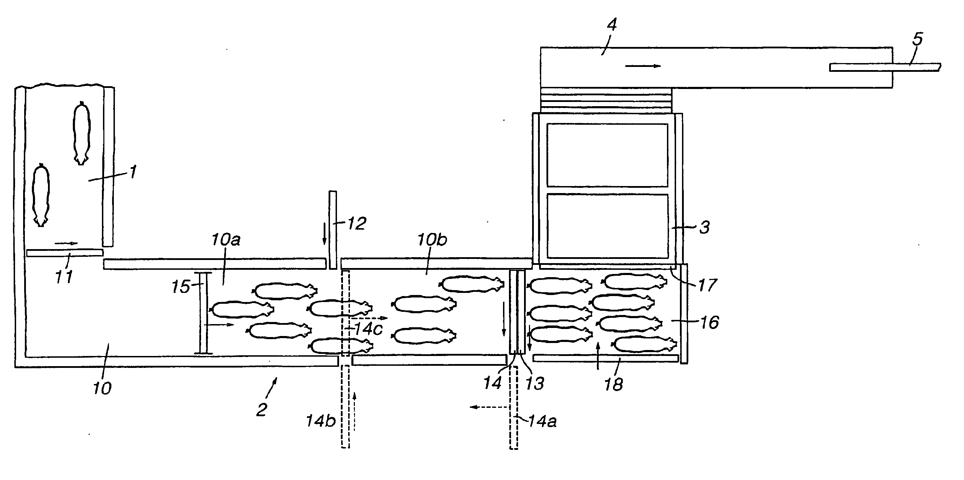

The invention is described in further detail in the following with reference to the drawing, which shows an embodiment of a system for division of a flock of slaughter pigs into groups and transfer of a group to a stunning apparatus for group wise stunning of the animals.

The drawing shows a driving corridor 1 for driving animals forwards from pens to the system, which comprises an arrangement 2 for division of the animals into groups of 7-8 animals and a stunning apparatus 3 for group wise stunning of the animals (e.g. from Butina ApS, Denmark). After the stunning process, the animals fall out on a discharge belt 4 and are chained by means of an elevator 5.

The arrangement 2 for division of the animals into groups comprises an oblong corridor section 10 with a sliding gate 11 at the entrance. A sliding division gate 12 is placed 2/3 down the corridor section, which by means of the gate can be divided into an upper corridor sector 10a with room for 15 animals as a standard, and a lower corridor sector 10b with room for a group of animals of 8 individuals as a standard. The division gate 12 can be fully opened and closed, and it can also take up a partially open position, in which there is sufficient room for the animals to pass one by one through the gap, but not sufficient room for two animals side by side to pass at the same time. The exit end of the corridor section is provided with an exit sliding gate 13.

At the corridor sector 10b a gate device is mounted with a travelling sliding gate 14. It can for instance be of the design described in the Danish patent application PA 2002 00466 "Arrangement and method for driving animals forwards in an oblong corridor section" (Slagteriernes Forskningsinstitut). In the shown situation, the travelling sliding gate 14 takes up the position which is shown by a full-drawn line, but it can also take up a number of other positions, three of which are shown by a dotted line and indicated by the reference numbers 14a, 14b and 14c. One side wall of the corridor section has two gaps adjacent the positions 14a and 14b, through which the travelling sliding gate 14 can pass. When not being used, the gaps in the side wall may be closed by a mechanically driven plate of the same height as the wall, so there is no risk of squeezing the animals. Corresponding plates can be found in connection with the sliding gates 11, 12 and 13.

A travelling elevating gate 15 is mounted at the corridor section 10 and it can travel between a starting position at the entrance end of the corridor section and an end position at the division gate 12.

At the exit end of the corridor section a transfer section 16 has been placed with room for a group of animals of 8 individuals as a standard. The section can be closed off by means of the exit gate 13 and is confined to one side by an elevating gate 17 placed in front of the entrance to the stunning apparatus, and to the other side by a movable wall 18, which can be moved to the side of elevating gate when access to the stunning apparatus is given free and the elevating gate is opened.

Arrows show the horizontal movements of the gates.

The system works in the following way:

From the pen area of the slaughterhouse a flock of animals of approx. 15 slaughter pigs are driven into the driving corridor 1 and towards the entrance to the corridor section 10, where the entrance gate 11 is opened. The animals walk into the corridor sector 10a and towards the division gate 12, which is closed, if the corridor sector 10b is not ready to receive animals. The entrance gate 11 is closed when all of the animals in the flock have passed it. When the corridor sector 10b is ready to receive animals (which can happen already before all of the animals are in the corridor sector 10a), the division gate 12 is opened partially so that one animal at a time can pass into the corridor sector 10b. When the division gate is open in this position and the entrance gate 11 is closed, the travelling elevating gate 15 can be run forwards in the corridor section 10 from its starting position at the entrance end of the corridor section, whereby the animals are driven forwards and enter corridor sector 10b one by one.

When a group of animals of 7-8 individuals have entered corridor sector 10b, which is closed in the remote end by the exit gate 13, the division gate 12 is fully closed. The travelling elevating gate 15 stops when it has reached the middle of corridor sector 10b to avoid squeezing of the animals. There are now a group of animals in sector 10b and a group of animals in the foremost half of sector 10a.

The travelling sliding gate is moved from position 14b to position 14c inside the corridor section. When the transfer section 16 is ready to receive a group of animals, the exit gate 13 is opened and the travelling sliding gate 14 is moved forwards in corridor sector 10b, causing the group of animals to walk/be driven into the transfer section 16. The travelling, sliding gate stops immediately in front of the position of the exit gate 13 in its closed state. The exit gate 13 is closed. There are now a group of animals in the transfer section 16.

The division gate 12 is opened completely to allow the group of animals in the foremost part of sector 10a to walk into corridor sector 10b. The travelling elevating gate 15 is started again, so that the animals are driven forwards and into corridor sector 10b. If desired, the opening of gate 12 can take place already when the travelling sliding gate starts from position 14b towards position 14c.

The travelling sliding gate 14 is moved to the position 14a outside the corridor section and further on to the position 14b, which processes can be started when the exit gate 13 has been closed.

The travelling elevating gate stops immediately in front of the position of the division gate 12 in its closed state, and the division gate is closed, whereby a group of animals has been isolated in the sector 10b. The travelling sliding gate is moved to position 14c in front of the gate 12 inside the driving corridor.

The travelling elevating gate 15 is returned to its starting position at the entrance end of the corridor section, after which the entrance gate 11 can be opened to allow a new flock of animals to enter the sector 10a from the driving corridor 1. The gate 11 can, if wanted, be opened already when the division gate 12 is closed. In this case the travelling elevating gate shall return to its starting position with the gate lifted in order to avoid collision with animals walking in the sector 10a. When the travelling elevating gate has reached its starting position the gate will be lowered again. The division process is started again by closing the gate 11, partially opening the division gate 12, and driving animals forwards by means of the travelling elevating gate when the sector 10b is released.

The gate device can instead of a travelling elevating gate have a travelling sliding gate of a design similar to the travelling sliding gate 14, so that the animals remain calm during the return of the travelling sliding gate.

When the stunning apparatus 3 is ready to receive a group of animals, the group in the transfer section 16 is driven into a box in the stunning apparatus. The elevating gate 17 is opened and the movable wall 18 is moved towards the position of the elevating gate. When the animals have entered the box, the elevating gate is closed and the movable wall returns to its starting position, after which the transfer section 16 is ready to receive the animals, which already have been or will be isolated in the sector 10b.

The animals are driven into the area 16 in the same way as the previous group of animals, the gate 13 being opened and the travelling sliding gate 14 being moved forwards, whereby the sector 10b is gradually emptied for the new animals in the sector 10a. When the travelling sliding gate 14 has reached the position at the gate 13, this is closed so that the animals are isolated in the area. They are led into a stunning box when this is ready to receive the group.

The driving-in of the animals into a box in the stunning apparatus takes place fairly independently of the division and driving process in the corridor section 10, which gives a high flexibility and improves the capacity of the system. The division of a flock of animals from the pen area into groups, and the driving-in of the groups into the stunning apparatus, can be done over and over again as continuous processes which can be carried out parallel with and relatively unimpeded by each other.

After stunning in the CO₂-atmosphe of the apparatus the animals fall out onto the discharge belt 4, from where they are chained by means of the elevator 5 for subsequent sticking and further processing in the slaughterhouse.

## Claims

1. Arrangement for division of animals into groups and transfer of groups of animals to a stunning apparatus (3), comprising an oblong corridor section (10) in which animals can be driven from an entrance end to an exit end, that it has a division gate (12) in the corridor section between the entrance end and the exit end, which gate is placed in such a way that the corridor area (10b) between the division gate and the exit end has room for a number of animals corresponding to the group size, and a transfer section (16) situated at the exit end of the corridor section (10) which transfer section has room for a number of animals corresponding to the group size, and which section has a connection with the entrance to the stunning apparatus such that animals are guided from the transfer section into the stunning apparatus; the arrangement further comprising a gate device, placed at the corridor section (10), with a travelling sliding gate (14) or a travelling elevating gate which can be moved in the corridor area (10b), from a position at the division gate (12) to a position at the exit end **characterised in that** the animals are guided from the transfer section into the stunning apparatus in a group and that the stunning apparatus has room for a number of animals corresponding to the group size.

2. Arrangement according to claim 1, **characterized in that** the transfer section (16) is placed directly between the exit end of the corridor section and the entrance to the stunning apparatus.

3. Arrangement according to claim 1, **characterized in that** the transfer section (16) has a rectangular shape with a short side placed opposite the exit end of the corridor section (10) and a long side placed opposite the entrance to the stunning apparatus.

4. Arrangement according to claim 3, **characterized in that** the transfer section (16) has a movable wall (18) at the other long side, which wall can be moved over to the long side opposite the entrance to the stunning apparatus.

5. Arrangement according to claim 1, **characterized in that** an access gate (13) is placed at the entrance of the transfer section from the corridor section (10).

6. Arrangement according to claim 1, **characterized in that** the travelling sliding/elevating gate (14) can return with the gate withdrawn from or elevated above the corridor section.

7. Arrangement according to claim 5 or 6 , **characterized in that** the gate device has a travelling sliding gate and comprises a first transport mechanism to pull the travelling sliding gate (14) sideways out of the corridor section (10) and push it sideways into the corridor section through gaps in one side wall of the corridor at the access gate (13) and the division gate (12), respectively, and a second transport mechanism to move the travelling sliding gate (14) in the longitudinal direction of the corridor section from a starting position (14c) in front of the division gate (12) to an end position at the access gate (13), and to move the travelling sliding gate (14) back outside the corridor section, after it has been pulled sideways out of the corridor section (10), from a position (14a) which is opposite the end position at the access gate and to a second position (14b), which is opposite the starting position(14c) in front of the division gate (12).

8. Arrangement according to claim 7, **characterized in that** the first transport mechanism comprises a guide device, in which the travelling sliding gate (14) is displaceable mounted so that the gate, by means of a motor, can be displaced out of the corridor through a gap in one side wall of the corridor at the access gate (13), from a position in the corridor section to a position (14a) outside the section, and can be moved in the opposite direction into the corridor through a gap in the same side wall of the corridor at the division gate (12), and that the second transport mechanism is connected with the guide device and the motor in such a way that it can transport these and the travelling sliding gate (14) in the longitudinal direction of the corridor section.

9. Arrangement according to claim 1, **characterized in that** the division gate (12) can be opened partially to a position, which allows animals to walk one by one through the passage formed in the corridor section (10) by the opening process, and that the gate (12) can also be opened completely to form an opening of the same width as the corridor section, which opening allows several animals to be driven next to each other by means of a driving device.

10. Arrangement according to claim 1, **characterized in that** the corridor area (10a) of corridor section between the entrance end and the division gate (12) has room for a flock of animals of the size that is wanted to be divided into groups.

11. Arrangement according to claim 1, **characterized in that** it comprises a driving gate (15), which can be moved in the longitudinal direction of the corridor section between a starting position at the entrance end of the corridor section and to a position at the division gate (12), such as a travelling sliding gate or a travelling elevating gate.

12. Arrangement according to claim 1, **characterized in that** it comprises an entrance opening at the entrance end of the corridor section by one of the long side walls of the corridor section (10), which opening can be closed by means of a gate (11).

13. Arrangement according to claim 1, **characterized in that** it comprises a stunning apparatus.

14. Method for division of animals into groups and transfer of groups of animals to a stunning apparatus (3), wherein
a) animals are driven in an oblong corridor section (10) from an entrance end towards an exit end and past an open division gate (12), which is placed between the entrance end and the exit end, the division gate being placed in such a way that the corridor area (10b) between the division gate (12) and the exit end has room for a number of animals corresponding to the group size,
b) the division gate (12) is closed when a number of animals corresponding to the group size have passed,
c) a gate device is placed at the corridor section (10), with a travelling sliding gate (14) or a travelling elevating gate which can be moved in the corridor area (10b) from a position at the division gate (12) to a position at the exit end drives the group of animals into a transfer section(16), placed in continuation of the corridor section (10) at the exit end of the section when the transfer section (16) is ready to receive a group of animals, which transfer section has room for a number of animals corresponding to the group size and has connection with the entrance to the stunning apparatus such that animals are guided from the transfer section into the stunning apparatus.
d) the access from the corridor section (10) to the transfer section (16) is closed,
e) the group of animals in the transfer section (16) is driven into the stunning apparatus (3) when the said stunning apparatus is ready to receive the group of animals, and
f) the process steps a) to e) are repeated as long as there are animals in the corridor area (10a) between the entrance end and the division gate (12), the division gate (12) being opened between each cycle,
**characterised in that** the group of animals in the transfer section (16) is driven into the stunning apparatus (3) in a group, the stunning apparatus having room for a number of animals corresponding to the group size.

15. Method according to claim 14, **characterized in that** the transfer section (16) has a rectangular shape with a short side placed opposite the exit end of the corridor section (10) and a long side placed opposite the entrance to the stunning apparatus and that a movable wall (18) at the other long side is moved over to the long side placed opposite the entrance to the stunning apparatus in connection with process step e).

16. Method according to claim 14, **characterized in that** the elevating/sliding gate is returned with the gate pulled out of or elevated above the corridor section after completion of step (c).

17. Method according to claim 14, **characterized in that** the division gate (12) is opened partially to a position which allows animals to walk one by one through the passage formed by the opening process when the number of animals on the corridor area (10a) between the entrance end and the division gate exceeds the number of animals in a group.

18. Method according to claim 14, **characterized in that** a flock of animals to be divided in groups is driven into the corridor area (10a) between the entrance end and the division gate and that an entrance gate (11) in the entrance end of the corridor section is closed when all animals in the flock has entered the area.

19. Method according to claim 14, **characterized in that** animals on the corridor area (10a) between the entrance end and the division gate are driven forwards by means of a travelling elevating or travelling sliding gate.

## Patentansprüche

1. Anordnung zum Teilen von Tieren in Gruppen und Transfer von Tiergruppen zu einer Betäubungsvorrichtung (3), umfassend einen rechteckigen Korridorabschnitt (10), in dem Tiere von einem Eingangsende zu einem Ausgangsende getrieben werden können, weiterhin umfassend ein Trenngatter (12) in dem Korridorabschnitt zwischen dem Eingangsende und dem Ausgangsende, wobei das Gatter derart platziert ist, dass der Korridorbereich (10b) zwischen dem Trenngatter und dem Ausgangsende Platz für eine Zahl von Tieren aufweist, die der Gruppengröße entspricht, und einen Transferabschnitt (16), der sich an dem Ausgangsende des Korridorabschnitts (10) befindet, wobei der Transferabschnitt Platz für eine Zahl von Tieren aufweist, die der Gruppengröße entspricht, und wobei der Abschnitt eine Verbindung mit dem Eingang zu der Betäubungsvorrichtung aufweist, so dass Tiere von dem Transferabschnitt in die Betäubungsvorrichtung geführt werden; wobei die Anordnung weiterhin eine Gattereinrichtung, die an dem Korridorabschnitt (10) platziert ist, mit einem verfahrbaren Schiebegatter (14) oder einem verfahrbaren Hebegatter, das in dem Korridorbereich (10b) aus einer Position an dem Trenngatter (12) in eine Position an dem Ausgangsende bewegt werden kann, umfasst, **dadurch gekennzeichnet, dass** die Tiere aus dem Transferabschnitt in einer Gruppe in die Betäubungsvorrichtung geführt werden und dass die Betäubungsvorrichtung Platz für eine Zahl von Tieren aufweist, die der Gruppengröße entspricht.

2. Anordnung nach Anspruch 1, **dadurch gekennzeichnet, dass** der Transferabschnitt (16) direkt zwischen dem Ausgangsende des Korridorabschnitts und dem Eingang zu der Betäubungsvorrichtung platziert ist.

3. Anordnung nach Anspruch 1, **dadurch gekennzeichnet, dass** der Transferabschnitt (16) eine rechteckige Form aufweist, wobei eine kurze Seite gegenüber dem Ausgangsende des Korridorabschnitts (10) platziert ist und eine lange Seite gegenüber dem Eingang zu der Betäubungsvorrichtung platziert ist.

4. Anordnung nach Anspruch 3, **dadurch gekennzeichnet, dass** der Transferabschnitt (16) eine bewegliche Wand (18) an der anderen langen Seite aufweist, wobei die Wand zu der langen Seite gegenüber dem Eingang zu der Betäubungsvorrichtung hinüber bewegbar ist.

5. Anordnung nach Anspruch 1, **dadurch gekennzeichnet, dass** ein Zugangsgatter (13) an dem Eingang des Transferabschnitts von dem Korridorabschnitt (10) platziert ist.

6. Anordnung nach Anspruch 1, **dadurch gekennzeichnet, dass** das verfalu-bare Schiebe-/Hebegatter (14) aus dem Korridorabschnitt herausgezogen oder über ihn gehoben zurückkehren kann.

7. Anordnung nach Anspruch 5 oder 6, **dadurch gekennzeichnet, dass** die Gattereinrichtung ein verfahrbares Schiebegatter aufweist und einen ersten Transportmechanismus umfasst, um das verfahrbare Schiebegatter (14) seitlich aus dem Korridorabschnitt (10) zu ziehen und es durch Spalte in einer Seitenwand des Korridors an dem Zugangsgatter (13) bzw. dem Trenngatter (12) seitlich in den Korridorabschnitt zu schieben, und einen zweiten Transportmechanismus, um das verfahrbare Schiebegatter (14) in der Längsrichtung des Korridorabschnitts aus einer Startposition (14c) vor dem Trenngatter (12) in eine Endposition an dem Zugangsgatter (13) zu bewegen und das verfahrbare Schiebegatter (14) außerhalb des Korridorabschnitts aus einer Position (14a), die sich gegenüber der Endposition an dem Zugangsgatter befindet, und in eine zweite Position (14b), die sich gegenüber der Startposition (14c) vor dem Trenngatter (12) befindet, zurück zu bewegen, nachdem es seitwärts aus dem Korridorabschnitt (10) herausgezogen wurde.

8. Anordnung nach Anspruch 7, **dadurch gekennzeichnet, dass** das der erste Transportmechanismus eine Führungseinrichtung umfasst, in der das verfahrbare Schiebegatter (14) verlagerbar angebracht ist, so dass das Gatter mittels eines Motors durch einen Spalt in einer Seitenwand des Korridors an dem Zugangsgatter (13) aus einer Position in dem Korridorabschnitt in eine Position (14a) außerhalb des Abschnitts aus dem Korridor verschoben werden kann und durch einen Spalt in der gleichen Seitenwand des Korridors an dem Trenngatter (12) in die entgegengesetzte Richtung in den Korridor bewegt werden kann, und dass der zweite Transportmechanismus mit der Führungseinrichtung und dem Motor auf eine solche Weise verbunden ist, dass er diese und das verfahrbare Schiebegatter (14) in der Längsrichtung des Korridorabschnitts transportieren kann.

9. Anordnung nach Anspruch 1, **dadurch gekennzeicknet, dass** das Trenngatter (12) teilweise in eine Position geöffnet werden kann, die es ermöglicht, dass Tiere eines nach dem anderen durch den in dem Korridorabschnitt (10) durch den Öffnungsvorgang gebildeten Durchgang gehen, und dass das Gatter (12) auch vollständig geöffnet werden kann, um eine Öffnung von der gleichen Breite wie der Korridorabschnitt zu bilden, wobei die Öffnung es ermöglicht, dass mehrere Tiere mittels einer Treibeinrichtung nebeneinander getrieben werden.

10. Anordnung nach Anspruch 1, **dadurch gekennzeichnet, dass** der Korridorbereich (10a) des Korridorabschnitts zwischen dem Eingangsende und dem Trenngatter (12) Platz für eine Tierherde von der Größe aufweist, die in Gruppen aufgeteilt werden soll.

11. Anordnung nach Anspruch 1, **dadurch gekennzeichnet, dass** sie ein Treibgatter (15) umfasst, das in der Längsrichtung des Korridorabschnitts zwischen einer Startposition an dem Eingangsende des Korridorabschnitts und in eine Position an dem Trenngatter (12) wie z.B. einem verfahrbaren Schiebegatter oder einem verfahrbaren Hebegatter bewegt werden kann.

12. Anordnung nach Anspruch 1, **dadurch gekennzeichnet, dass** sie eine Eingangsöffnung an dem Eingangsende des Korridorabschnitts an einer der langen Seitenwände des Korridorabschnitts (10) umfasst, wobei die Öffnung mittels eines Gatters (11) geschlossen werden kann.

13. Anordnung nach Anspruch 1, **dadurch gekennzeichnet, dass** sie eine Betäubungsvorrichtung umfasst.

14. Verfahren zum Teilen von Tieren in Gruppen und Transfer von Tiergruppen zu einer Betäubungsvorrichtung (3), wobei
a) Tiere in einem rechteckigen Korridorabschnitt (10) von einem Eingangsende zu einem Ausgangsende hin und an einem offenen Trenngatter (12) vorbei getrieben werden, das zwischen dem Eingangsende und dem Ausgangsende platziert ist, wobei das Trenngatter auf eine solche Weise platziert ist, dass der Korridorbereich (10b) zwischen dem Trenngatter (12) und dem Ausgangsende Platz für eine Zahl von Tieren aufweist, die der Gruppengröße entspricht,
b) das Trenngatter (12) geschlossen wird, wenn eine Zahl von Tieren, die der Gruppengröße entspricht, vorbeigegangen ist,
c) eine an dem Korridorabschnitt (10) platzierte Gattereinrichtung mit einem verfahrbaren Schiebegatter (14) oder einem verfahrbaren Hebegatter, das in dem Korridorbereich (10b) aus einer Position an dem Trenngatter (12) in eine Position an dem Ausgangsende bewegt werden kann, die Gruppe von Tieren in einen Transferabschnitt (16) treibt, der in Fortsetzung des Korridorabschnitts (10) an dem Ausgangsende des Abschnitts platziert ist, wenn der Transferabschnitt (16) bereit ist, eine Gruppe von Tieren aufzunehmen, wobei der Transferabschnitt Platz für eine Zahl von Tieren aufweist, die der Gruppengröße entspricht, und eine Verbindung mit dem Eingang zu der Betäubungsvorrichtung aufweist, so dass Tiere von dem Transferabschnitt in die Betäubungsvorrichtung geführt werden,
d) der Zugang von dem Korridorabschnitt (10) zu dem Transferabschnitt (16) geschlossen wird,
e) die Gruppe von Tieren in dem Transferabschnitt (16) in die Betäubungsvorrichtung (3) getrieben wird, wenn die Betäubungsvorrichtung bereit ist, die Gruppe von Tieren aufzunehmen, und
f) die Verfahrensschritte a) bis e) wiederholt werden, solange sich Tiere in dem Korridorbereich (10a) zwischen dem Eingangsende und dem Trenngatter (12) befinden, wobei das Trenngatter (12) zwischen jedem Zyklus geöffnet wird,
**dadurch gekennzeichnet, dass** die Gruppe von Tieren in dem Transferabschnitt (16) in einer Gruppe in die Betäubungsvorrichtung (3) getrieben wird, wobei die Betäubungsvorrichtung Platz für eine Gruppe von Tieren aufweist, die der Gruppengröße entspricht.

15. Verfahren nach Anspruch 14, **dadurch gekennzeichnet, dass** der Transferabschnitt (16) eine rechteckige Form aufweist, wobei eine kurze Seite gegenüber dem Ausgangsende des Korridorabschnitts (10) platziert ist und eine lange Seite gegenüber dem Eingang zu der Betäubungsvorrichtung platziert ist, und dass eine bewegliche Wand (18) an der anderen langen Seite in Verbindung mit Verfahrensschritt e) zu der langen Seite hinüber bewegt wird, die gegenüber dem Eingang zu der Betäubungsvorrichtung platziert ist.

16. Verfahren nach Anspruch 14, **dadurch gekennzeichnet, dass** das Hebe-/Schiebegatter nach Abschluss von Schritt (c) zurückgefahren wird, wobei das Gatter aus dem Korridorabschnitt herausgezogen oder über ihn gehoben ist.

17. Verfahren nach Anspruch 14, **dadurch gekennzeichnet, dass** das Trenngatter (12) partiell in eine Position geöffnet wird, die es ermöglicht, dass Tiere eines nach dem anderen durch den durch den Öffnungsvorgang gebildeten Durchgang gehen, wenn die Zahl von Tieren auf dem Korridorbereich (10a) zwischen dem Eingangsende und dem Trenngatter die Zahl von Tieren in einer Gruppe überschreitet.

18. Verfahren nach Anspruch 14, **dadurch gekennzeichnet, dass** eine Herde von Tieren, die in Gruppen geteilt werden soll, in den Korridorbereich (10a) zwischen dem Eingangsende und dem Trenngatter getrieben wird, und dass ein Eingangsgatter (11) in dem Eingangsende des Korridorabschnitts geschlossen wird, wenn alle Tiere in der Herde den Bereich betreten haben.

19. Verfahren nach Anspruch 14, **dadurch gekennzeichnet, dass** Tiere auf dem Korridorbereich (10a) zwischen dem Eingangsende und dem Trenngatter mittels eines verfahrbaren Hebegatters oder eines verfahrbaren Schiebegatters vorwärts getrieben werden.

## Revendications

1. Agencement de séparation d'animaux en groupes et de transfert des groupes d'animaux à un appareil d'étourdissement (3), comprenant une partie oblongue formant corridor (10) dans laquelle des animaux peuvent être entraînés pour se déplacer d'une extrémité d'entrée à une extrémité de sortie, une porte de séparation (12) disposée dans la partie formant corridor entre l'extrémité d'entrée et l'extrémité de sortie, laquelle porte est placée de façon à ce que la zone de corridor (10b) comprise entre la porte de séparation et l'extrémité de sortie dispose de la place nécessaire pour un certain nombre d'animaux correspondant à la taille du groupe, et une partie de transfert (16) située à l'extrémité de sortie de la partie formant corridor (10) et qui dispose de la place nécessaire pour un certain nombre d'animaux correspondant à la taille du groupe, laquelle partie de transfert a une liaison avec l'entrée de l'appareil d'étourdissement de façon à ce que les animaux soient guidés depuis la partie de transfert pour entrer dans l'appareil d'étourdissement ; l'agencement comprenant en outre un dispositif à porte placé au niveau de la partie formant corridor (10), avec une porte à déplacement par coulissement (14) ou une porte à déplacement par élévation qui peut se déplacer dans la zone de corridor (10b) entre une position située au niveau de la partie de séparation (12) et une position située au niveau de l'extrémité de sortie, **caractérisé en ce que** les animaux sont guidés depuis la partie de transfert pour entrer dans l'appareil d'étourdissement en formant un groupe et **en ce que** l'appareil d'étourdissement dispose de la place nécessaire pour un certain nombre d'animaux correspondant à la taille du groupe.

2. Agencement selon la revendication 1, **caractérisé en ce que** la partie de transfert (16) est placée directement entre l'extrémité de sortie de la partie formant corridor et l'entrée de l'appareil d'étourdissement.

3. Agencement selon la revendication 1, **caractérisé en ce que** la partie de transfert (16) a une forme rectangulaire dont un petit côté est placé à l'opposé de l'extrémité de sortie de la partie formant corridor (10) et dont un grand côté est placé à l'opposé de l'entrée de l'appareil d'étourdissement.

4. Agencement selon la revendication 3, **caractérisé en ce que** la partie de transfert (16) a une paroi mobile (18) sur l'autre grand côté, laquelle paroi peut être déplacée jusqu'au grand côté opposé à l'entrée de l'appareil d'étourdissement.

5. Agencement selon la revendication 1, **caractérisé en ce qu'**une porte d'accès (13) est placée à l'entrée de la partie de transfert depuis la partie formant corridor (10).

6. Agencement selon la revendication 1, **caractérisé en ce que** la porte à déplacement par coulissement / élévation (14) peut retourner à sa position de départ en lorsqu'on retire la porte de la partie formant corridor ou qu'on l'élève par rapport à celle-ci.

7. Agencement selon la revendication 5 ou 6, **caractérisé en ce que** le dispositif à porte est constitué d'une porte à déplacement par coulissement et comprend un premier mécanisme de transport permettant de tirer latéralement la porte à déplacement par coulissement (14) hors de la partie formant corridor (10) et de la pousser latéralement dans la partie formant corridor à travers des espacements pratiqués dans une paroi latérale du corridor au niveau de la porte d'accès (13) et de la porte de séparation (12) respectivement, et un deuxième mécanisme de transport permettant de déplacer la porte à déplacement par coulissement (14) dans la direction longitudinale de la partie formant corridor entre une position de départ (14c) située en avant de la porte de séparation (12) et une position d'arrivée située au niveau de la porte d'accès (13), et de faire revenir la porte à déplacement par coulissement (14) à l'extérieur de la partie formant corridor après qu'elle a été tirée latéralement hors de la partie formant corridor (10), à partir d'une position (14a) qui est opposée à la position d'extrémité située au niveau de la porte d'accès et une vers deuxième position (14b) qui est située à l'opposé de la position de départ (14c) située en avant de la porte de séparation (12).

8. Agencement selon la revendication 7, **caractérisé en ce que** le premier mécanisme de transport comprend un dispositif de guidage, dans lequel la porte à déplacement par coulissement (14) est montée de manière mobile de façon à pouvoir, au moyen d'un moteur, déplacer la porte hors du corridor à travers un espacement pratiqué dans une paroi latérale du corridor au niveau de la porte d'accès (13), à partir d'une position située dans la partie formant corridor et vers une position (14a) située hors de cette partie, et de la déplacer dans la direction opposée pour la faire entrer dans le corridor à travers un espacement pratiqué dans la même paroi latérale du corridor au niveau de la porte de séparation (12), et **en ce que** le deuxième mécanisme de transport est relié au dispositif de guidage et au moteur de façon à ce qu'il puisse transporter ceux-ci et la porte à déplacement par coulissement (14) dans la direction longitudinale de la partie formant corridor.

9. Agencement selon la revendication 1, **caractérisé en ce que** la porte de séparation (12) peut s'ouvrir partiellement jusqu'à une position qui permet aux animaux de traverser un par un le passage formé dans la partie formant corridor (10) par l'opération d'ouverture, et **en ce que** la porte (12) peut également s'ouvrir complètement pour former une ouverture de même largeur que celle de la partie formant corridor, ce qui permet de rassembler plusieurs animaux les uns à proximité des autres au moyen d'un dispositif d'entraînement.

10. Agencement selon la revendication 1, **caractérisé en ce que** la zone de corridor (10a) de la partie formant corridor située entre l'extrémité d'entrée et la porte de séparation (12) dispose de la place nécessaire pour contenir un troupeau d'animaux de taille souhaitée et qui est destiné à être séparé en groupes.

11. Agencement selon la revendication 1, **caractérisé en ce qu'**il comprend une porte d'entraînement (15) qui peut être déplacée dans la direction longitudinale de la partie formant corridor entre une position de départ située au niveau de l'extrémité d'entrée de la partie formant corridor et jusqu'à une position d'arrivée située au niveau de la porte de séparation (12), comme une porte à déplacement par coulissement ou une porte à déplacement par élévation.

12. Agencement selon la revendication 1, **caractérisé en ce qu'**il comprend une ouverture d'entrée située au niveau de l'extrémité d'entrée de la partie formant corridor à proximité d'une des parois latérales constituant un grand côté de la partie formant corridor (10), laquelle ouverture peut être fermée au moyen d'une porte (11).

13. Agencement selon la revendication 1, **caractérisé en ce qu'**il comprend un appareil d'étourdissement.

14. Procédé de séparation d'animaux en groupes et de transfert des groupes d'animaux vers un appareil d'étourdissement (3), dans lequel
a) les animaux sont entraînés pour se déplacer dans une partie oblongue formant corridor (10) à partir d'une extrémité d'entrée et en direction d'une extrémité de sortie et passent par une porte de séparation (12) ouverte qui est disposée entre l'extrémité d'entrée et l'extrémité de sortie, la porte de séparation étant placée de façon à ce que la zone de corridor (10b) comprise entre la porte de séparation (12) et l'extrémité de sortie dispose de la place nécessaire pour un certain nombre d'animaux correspondant à la taille du groupe
b) la porte de séparation (12) est fermée lorsqu'un certain nombre d'animaux correspondant à la taille du groupe est passé.
c) un dispositif à porte est placé dans la partie formant corridor (10), avec une porte à déplacement par coulissement (14) ou une porte à déplacement par élévation qui peut être déplacée dans la zone de corridor (10b) à partir d'une position située au niveau de la porte de séparation (12) et jusqu'à une position située au niveau de l'extrémité de sortie et entraîne le groupe d'animaux pour le faire entrer dans une partie de transfert (16) placée dans la continuité de la partie formant corridor (10) à l'extrémité de sortie de cette partie lorsque la partie de transfert (16) est prête à recevoir un groupe d'animaux, laquelle partie de transfert dispose de la place nécessaire pour un certain nombre d'animaux correspondant à la taille du groupe et est reliée à l'entrée de l'appareil d'étourdissement de façon à ce que les animaux soient guidés depuis la partie de transfert vers l'appareil d'étourdissement.
d) l'accès à la partie de transfert (16) depuis la partie formant corridor (10) est fermé,
e) le groupe d'animaux situés dans la partie de transfert (16) est entraîné dans l'appareil d'étourdissement (3) lorsque ledit appareil d'étourdissement est prêt à recevoir le groupe d'animaux, et
f) les étapes a) à e) se répètent tant que des animaux sont présents dans la zone de corridor (10a) entre l'extrémité d'entrée et la porte de séparation (12), la porte de séparation (12) étant ouverte entre deux cycles,
**caractérisé en ce que** le groupe d'animaux situés dans la partie de transfert (16) est entraîné dans l'appareil d'étourdissement (3) dans un groupe, l'appareil d'étourdissement disposant de la place nécessaire pour un certain nombre d'animaux correspondant à la taille du groupe.

15. Procédé selon la revendication 14, **caractérisé en ce que** la partie de transfert (16) a une forme rectangulaire dont un petit côté est situé à l'opposé de l'extrémité de sortie de la partie formant corridor (10) et un grand côté situé à l'opposé de l'entrée vers l'appareil d'étourdissement et **en ce qu'**une paroi mobile (18) située au niveau de l'autre grand côté est déplacée jusqu'au grand côté qui est à l'opposé de l'entrée de l'appareil d'étourdissement, en relation avec l'étape e).

16. Procédé selon la revendication 14, **caractérisé en ce que** la porte à déplacement par élévation / coulissement retourne à sa position de départ, la porte ayant été retirée de la partie formant corridor ou élevée par rapport à celle-ci une fois l'étape c) effectuée.

17. Procédé selon la revendication 14, **caractérisé en ce que** la porte de séparation (12) est partiellement ouverte jusqu'à une position qui permet aux animaux de traverser un par un le passage formé par l'opération d'ouverture lorsque le nombre d'animaux situés dans la zone de corridor (10a) comprise entre l'extrémité d'entrée et la porte de séparation dépasse le nombre d'animaux correspondant à un groupe.

18. Procédé selon la revendication 14, **caractérisé en ce qu'**un troupeau d'animaux devant être séparés en différents groupes est entraîné dans la zone de corridor (10a) comprise entre l'extrémité d'entrée et la porte de séparation et **en ce que** la porte d'entrée (11) de l'extrémité d'entrée de la partie formant corridor est fermée lorsque tous les animaux du troupeau sont entrés dans la zone.

19. Procédé selon la revendication 14, **caractérisé en ce que** les animaux situés dans la zone de corridor (10a) comprise entre l'extrémité d'entrée et la porte de séparation sont entraînés en avant au moyen d'une porte à déplacement par élévation ou par coulissement.
